(19) Europäisches Patentamt / European Patent Office / Office européen des brevets

(11) EP 2 014 994 A2

## (12) EUROPEAN PATENT APPLICATION

(43) Date of publication:
**14.01.2009 Bulletin 2009/03**

(51) Int Cl.:
***F24D 19/00*** *(2006.01)* ***F24D 19/10*** *(2006.01)*

(21) Application number: **08156476.7**

(22) Date of filing: **19.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.05.2007 GB 0709738**

(71) Applicant: **Graham, Robin Fanore (IE)**

(72) Inventor: **Graham, Robin Fanore (IE)**

(74) Representative: **Hartnett, Margaret Kathleen Murgitroyd & Company Scotland House 165-169 Scotland Street GB-Glasgow G5 8PL (GB)**

## (54) Distributed Temperature Control System

(57)    The present invention is a novel, distributed energy saving space heating system which provides individual *in situ* heating control for each room in a building. This accommodates changes in environmental conditions and differences in room/building construction.

The present invention also allows heating (or air conditioning) in individual rooms to be switched on or off as required. To this end, the present invention employs two variable temperature settings for each room mainly a higher comfort setting and a lower standby temperature setting. The comfort and standby room temperature settings may be altered according to the activities occurring in a room.

The present invention also comprises a mechanism for recording data pertaining to the heating/cooling patterns of individual rooms over prolonged periods of time. The present invention also comprises a reporting system for collating this data and presenting the information to the user, thereby providing detailed information on individual rooms heating/cooling performance and effectively providing an energy audit of a building, thereby providing guidance on how the present invention might be reconfigured to drive it closer to the users requirements. This information enables the user to individually tailor the temperature settings in each room to match the actual and specific heating demands of the rooms (as opposed to traditional heating mechanisms which employ universal heating/cooling settings for all the rooms in a building). This in turn, enables a user to take control of their heating/cooling environment in terms of cost and comfort, in an intuitive way.

FIGURE 1

**Description**

Field of the Invention

The present invention relates to a temperature control system, and in particular, a distributed temperature control system.

Background of the Invention

Domestic temperature control systems were first developed in an age of relatively low energy costs. Such systems typically comprised a central boiler and a heat distribution system, wherein the heat distribution system normally comprised radiators and connecting pipe work. In use, domestic hot water (for kitchens, bathrooms, etc.) would be provided indirectly from a cylinder forming part of the heat distribution system or directly from the boiler (i.e. in a combination or combi-boiler).

From this initial model, two basic domestic temperature control systems have evolved; namely a zoned system and a thermostatic radiator valve (TRV) system. In a zoned system, pipe-work from a boiler supplies hot water to radiators in different areas of a house. In addition, a zoned system controls the temperature of a particular area (known as a zone) in the house by means of a thermostat placed in the zone. Thermostatic radiator valve (TRV) systems typically use the expansion of a wax (or fluid), caused by an increase in temperature, to regulate the flow of hot water into a radiator. Whilst the primary function of a TRV is to compensate for the use of oversized radiators, TRVs may also be used to control the temperature near the radiator.

When used for controlling temperature, both a zoned system and the TRV system use a centrally placed controller (normally located near a boiler), which typically switches on or off the boiler at specified times (which may be set by the user). However, in the context of a domestic setting both the zoned system and the TRV system provide comparatively crude temperature control, insofar as they typically control the temperature of a zone which may embrace several rooms in a house (e.g. all the bedrooms, or in a two-storey house all the upstairs rooms or all the downstairs rooms) or, in the case of a TRV all the radiators connected to a pipe-work path.

The era of low-cost energy has long past. In the wake of increased awareness of the finite availability of current fuel sources and the concomitant increase in the cost of such fuel sources, the need for heating systems that satisfy the heating needs of users whilst minimising overall energy consumption is of paramount importance.

Summary of the Invention

A distributed temperature control system comprising:

a plurality of sensors configured to measure a one or more environmental attributes and produce environmental measurement data therefrom;
a plurality of actuators;
a one or more control units configured to receive environmental measurement data from the sensors and to transmit a one or more control signals to one or more of the actuators;
wherein in use,
the sensors are deployed in a plurality of rooms of a building to measure the environmental attributes of each such room; and
in response to received environmental measurement data from a one or more of the rooms, a control unit transmits a control signal to one or more of the actuators and a heating means or a cooling means to cause the temperature of the room to attain a pre-determined desired temperature value for the time at which the environmental measurement was made, independently of the temperatures of the rest of the rooms in the building; and

wherein the distributed temperature control system further comprises a data storage means configured to store environmental measurement data for each of the rooms.

Preferably, the distributed temperature control system comprises a data presentation means configured to present in report form to a user, the collated environmental measurement data from the data storage means.

Preferably, the data presentation means is operable within a separate computer device.

Preferably, the sensors are temperature sensors and the environmental measurement data is temperature measurement data.

Desirably, the sensors are smoke detectors or humidity sensors or air quality sensors or particulate detectors.

Preferably, the distributed temperature control system comprises a means of setting multiple desired temperatures for each room, wherein each such temperature has an associated time range over which the distributed temperature control system is to control the room's temperature to attain that temperature.

Preferably, the distributed temperature control system comprises a means of setting multiple desired temperatures for a particular time range for each room.

Desirably, a first desired temperature for a particular time range is a standby temperature, whose value is selected to provide heating to the room when unoccupied.

Desirably, a second desired temperature for a particular time range has a value selected to provide heating to the room when occupied.

Preferably, the distributed temperature control system comprises a means of switching between the multiple desired temperatures for a particular time range for each room.

Desirably, the distributed temperature control system comprises a secondary storage means configured to store multiple desired temperatures for a given time range.

Desirably, the desired temperatures and associated time ranges of the distributed temperature control system are settable by a user.

Desirably, the distributed temperature control system comprises a switching means configured to allow a user to switch the desired temperature of a room between any of the multiple desired temperatures set therefor.

Preferably, the distributed temperature control system comprises a user-activated means of decreasing the temperature or increasing the desired temperature of a room.

Preferably, the distributed temperature control system comprises a remote activation means configured to remotely activate the distributed temperature control system.

Preferably, the remote activation means is accessible by a mobile phone.

Alternatively, the remote activation means is accessible through the internet.

Desirably, the distributed temperature control system comprises a remote disabling means configured to remotely disable the distributed temperature control system.

Desirably, the remote disabling means is accessible by a mobile phone.

Alternatively, the remote disabling means is accessible through the internet.

Brief Description of the Drawings

An embodiment of the invention is herein described by way of example only with reference to the accompanying drawings in which:

Figure 1 is a block diagram of the heating system of the preferred embodiment;
Figure 2 is a block diagram of a controller in the heating system of the preferred embodiment; and
Figure 3 is a not-to-scale plan view of an exemplary ground floor of an exemplary house, wherein all the areas in the ground floor are heated to 21°C by the heating system of the preferred embodiment.

Detailed Description

_1. Overview_

The preferred embodiment provides a novel energy-saving space heating system for domestic and light commercial applications. The preferred embodiment can be installed into new buildings or fitted into (and thereby upgrade) existing buildings. The preferred embodiment is applicable to a variety of different heating systems, including: oil fired temperature control systems, natural gas fired temperature control systems, LP gas fired temperature control systems, electrical heating systems, geothermal pump temperature control systems, solar heating systems, pellet and wood burning temperature control systems, combined heat and power temperature control systems, hydrogen cell powered temperature control systems, and renewable energy temperature control systems including wind and wave powered temperature control systems. Similarly, the preferred embodiment is applicable to air conditioning systems, heat and air conditioning systems and warm air systems.

The preferred embodiment provides an adaptive mechanism for satisfying the heating requirements of defined spaces in an energy-efficient fashion. The defined spaces in question are not constrained by any existing pipe-work, wiring or ducting in a building's heating system. Instead, the defined spaces are those most easily identified by occupiers of the building as rooms, corridors, hallways, stairwells, etc. For the sake of clarity and brevity, such spaces will be referred to henceforth as 'rooms'.

To reduce the energy consumption of a heating system, the preferred embodiment only supplies heat where and when it is specifically required. Further, the present embodiment only supplies enough heat to achieve a specifically required temperature level. To this end, the preferred embodiment recognizes that 'room' usage may be irregular. For example, whilst a room may ostensibly be used over a given time period, the room in question may actually only be occupied for random intervals during these periods. The preferred embodiment also recognizes that occupancy patterns can change dramatically over a period of time (e.g. on the birth of a child, when it is necessary for tightly controlled heating to be provided continuously in some rooms). The preferred embodiment further recognizes that buildings differ in terms of their solar gain, wind exposure, construction, levels of insulation etc. Accordingly, a heating system should ideally adapt to the different conditions and constraints imposed by these constructional and environmental features.

Further, the preferred embodiment is designed to be simple to use, providing clear indications of the current operational state of a 'room' (wherein the indications may be provided by visual indicators or touch pads for the visually impaired). In a similar vein, the preferred embodiment is designed to acquire environmental, and more particularly, heating-related data and produce an energy audit therefrom to enable a user to fine-tune their heating requirements.

All these functions are achieved by a novel, distributed energy-saving space heating system which provides individual *in-situ* heating control for each 'room'. This accommodates changes in environmental conditions and differences in room/building construction. The preferred embodiment also allows heating (or air conditioning) in individual 'rooms' to be switched on, or off as required. To this end, the preferred embodiment employs two variable temperature settings for each 'room', namely a higher 'comfort' setting (for when the 'room' is occupied) and a lower 'standby' temperature (to accommodate irregular usage). The 'comfort' and 'standby' 'room' temperature settings may be altered according to the activities occurring in the room in question. For example, in a kitchen dining area where food is being prepared, the ideal working temperature (comfort temperature) will be lower than the comfort temperature required when sitting down to eat the food. Also, the standby temperature prior to food preparation may well be higher than that required at other parts of the day.

The preferred embodiment also provides a system with simple and easily understood human-machine interfaces. In a similar vein, the preferred embodiment comprises a mechanism for recording data pertaining to the heating/cooling patterns of individual rooms over prolonged periods of time. The preferred embodiment comprises a reporting system for collating this data and presenting the information to a user, thereby providing detailed information (e.g. room heat-up or cooldown times) on individual room heating/cooling performance and effectively providing an energy audit (detailing the current heating/cooling scenario) of a building and providing guidance on how the system might be reconfigured to drive it closer to the users' requirements.

This information enables a user to individually tailor the temperature settings of each room to match the actual and specific heating demands of the rooms (as opposed, for example, to the crude mechanism of employing universal heating/cooling settings for all the rooms in a building). This in turn enables a user to take control of their heating/cooling environment in terms of cost and comfort in an intuitive way. In other words, the user becomes part of the system and, as such, will use their individual perception of what is 'optimal' to set up the system. This will enable a user to more accurately control their energy usage and hence reduce their energy spend (or carbon footprint depending on the users perceived relative importance of cost versus environment) in the same way that a bank statement puts the user in control of their bank account.

In a related fashion, the reporting system identifies areas of excessive heat loss. This enables a user to take remedial action to control or reduce the heat loss, so that the relevant building as a whole becomes more energy efficient. Similarly, the reporting system quickly identifies irregular heating patterns and hence faults within the building.

These elements collectively enable the preferred embodiment to adapt to ever-changing conditions in individual buildings and thereby optimise the heat-supply regime so that heat is only supplied where and when it is required, and in the most energy-efficient way.

*2. Detailed Description*

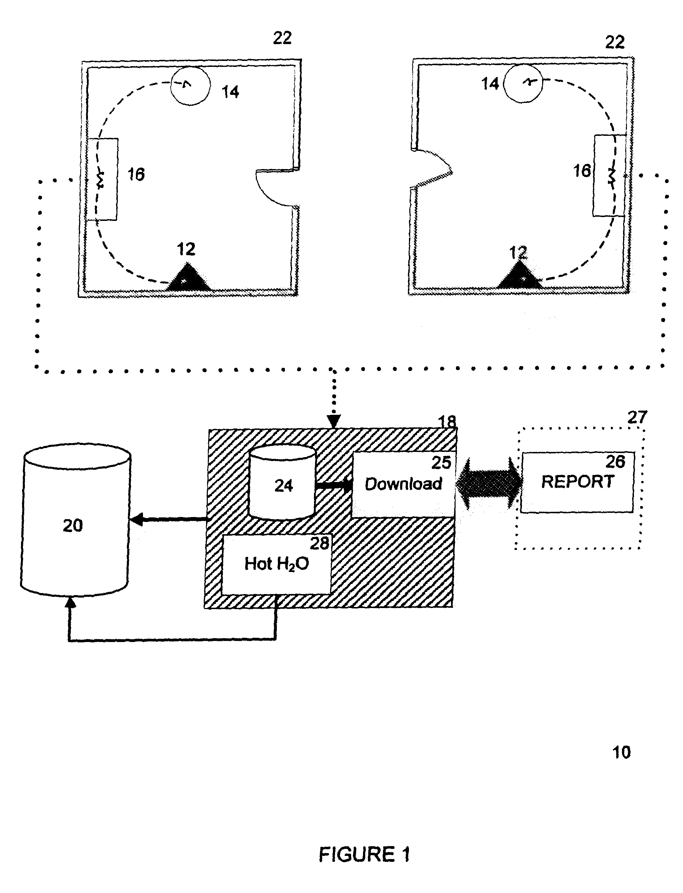

Referring to Figure 1, the temperature control system 10 of the preferred embodiment comprises a plurality of actuators 12, sensors 14 and room controllers 16. The sensors include thermal sensors or other sensors such as smoke detectors, air quality sensors, humidity sensors, particulate detectors or sensors of other environmental attributes. Such environmental sensors provide useful information for the distributed temperature control system 10, since for example, an energy-efficient room with poor air quality might indicate poor ventilation.

Whilst Figure 1 shows the sensors 14 and room controllers 16 as separate entities, it will be appreciated that the sensors 14 could also be integrated with the room controllers 16 in a single unit. In the case of a water heated radiator system, the actuators 12 are likely to be a battery powered motorised radiator valves (acting on the inlet flow to each radiator in the room). The temperature control system 10 further comprises a supervisory control unit 18 in communication with a boiler 20 (or other heating system, e.g. solar heating or geothermal heating system) and/or air conditioning system (not shown).

When the temperature control system 10 is deployed in a building comprising a plurality of rooms 22, a one or more actuators 12, sensors 14 and a room controller 16 are installed in each room. The actuators 12 and the sensors 14 in each room 22 are in communication with the room controller 16 for the room 22. The room controllers 16 are in turn in communication with the supervisory control unit 18. In use, the room controller 16 in a room 22 acquires information from the sensors 14 in the room 22, regarding the temperature (or other environmental attribute) of the room 22. In the event that the temperature of the room 22 is below a required temperature, the room controllers 16 send a control message to the actuators 12 in the room and to the supervisory controller unit 18, which causes the boiler 20 (for example) to fire (or the air conditioning unit to be switched on).

The advantage of this partial heating/cooling circuit arrangement is that since the heated/cooled medium (e.g. heated water) from the boiler 20 (or cold air from the air conditioning unit) is only routed through (radiators [for heated water] in) the room 22 that needs it, there is less heat lost (or heat gained) from the heated medium (or by the cooled medium) on its return to the boiler 20 (or air conditioning unit), than if the heated/cooled medium had been routed through the entire house (e.g. with a heated water system all other open radiators), as it would otherwise have been in a traditional heating system. Accordingly, the boiler 20 does not need to fire as often (or the air conditioning unit does not need to be switched on as long) to maintain the heated/cooled medium at the required temperature. Thus, there is less energy consumed. It should be noted that boilers 20 also often contain systems which provide frost protection thereto.

The room controllers 16 also provide adjustable preset heating levels, namely the afore-mentioned standby level and comfort level. These preset heating levels are useful for intermittent room usage. The room controllers 16 further provide heating on demand and heat-off; and indicators of the current heat status of the room 22 in question. The room controllers 16 forward all the control, temperature status (from the sensors 14) and heating demand information together with actuation signals 12 for their associated room 22 to the supervisory control unit 18.

The supervisory control unit 18 organises the information from all the room controllers 16 and provides room override facilities (all heat off, heat 'room' x to level y, etc.) and reporting facilities. To this end, the supervisory control unit 18 comprises a data storage module 24 that stores the heating-related data for each room. The supervisory control unit 18 further comprises a download module 25 that enables the heating-related data stored in the data storage module 24 to be downloaded to a reporting module 26 which may be included in a separate computer device 27, or may be directly integrated into the supervisory control unit 18. The reporting module 26 analyses the data and produces a detailed report, or an energy audit of the building.

The data collected and down-loaded from the supervisory control unit 18 may be presented using simple graphs and pie-charts. Although other visualisation modalities may also be used. In addition, the reporting module 26 includes a facility for enabling a user to provide additional 'house specific' information (e.g. names for each room; room volumes, etc.), which enable the user to more easily interpret the data relating to their home energy usage.

The supervisory control unit 18 may further comprise a hot water module 28, which communicates with the boiler 20 to provide domestic hot water. However, it will be appreciated that this facility is not required if a combi-boiler is being used.

In one embodiment, these elements are connected wirelessly and the supervisory control unit is hard wired to the boiler 20. In this case, wireless connections signals could be transmitted throughout a wireless communications network (in which case the communications network is likely to organise the information paths) to the supervisory control unit 18. However, since a given room controller 16 will need to know if its corresponding one or more actuators 12 have activated, it is likely that the primary path for the wireless connections signals will be via the room controllers 16. This enables all the elements to be optimally placed either in relation to the operational requirements of the system or for user convenience. However, it will be appreciated that other mechanisms of connection between the elements are also possible. For example, all the elements may be hard-wired together; in which case, information from the one or more actuators 12 (for boiler activation, reporting or fault diagnosis purposes) would be transmitted through their corresponding room controllers 16.

As a further enhancement, the supervisory control unit 18 comprises an optimal start module which uses data regarding the heat-up time of the boiler 20 (determined from the heating-related data stored in the data store 24) in a predictive controller to calculate when the boiler needs to start firing in order to ensure that a required temperature is achieved at a specified time. This in turn switches on the boiler 20 in advance of the times set in the room controllers 16 in an attempt to overcome system heating delays, so that large amounts of energy do not need to be consumed in bringing the boiler 20 to the desired temperature to heat the rooms. Similarly, the supervisory control unit 18 can also include an optimal stop module, which suppresses boiler firing near the end of a heating period, if such suppression does not compromise the desired room temperature requirements.

In another variant of the preferred embodiment, the temperature control system 10 comprises a facility for remotely activating or deactivating a boiler 20 by way of SMS messages. In particular, the supervisory control unit 18 comprises a wireless receiver configured to receive specific SMS control messages. On receipt of such a message, the supervisory control unit 18 over-rides the timing periods of the room controllers 16, that cause the boiler 20 to fire. This is particularly useful in the event of unforeseen circumstances, e.g. delayed flights, extended meetings etc. wherein a user may find themselves returning to their house outside the normal timings for the activation of the temperature control system 10, in which case some alteration to the heating requirements in any of the rooms of the house may be required. By over-riding the normal timings and specifically ordering the activation of the temperature control system 10, the user can be assured that their house is heated on their return.

Similarly, the supervisory control unit 18 comprises a disabling facility comprising a wireless receiver adapted to receive a disabling SMS message. On receipt of the disabling SMS message, the heating system 10 of the preferred embodiment is disabled, so that the heating system infrastructure and protocol reverts to that of a traditional TRV system.

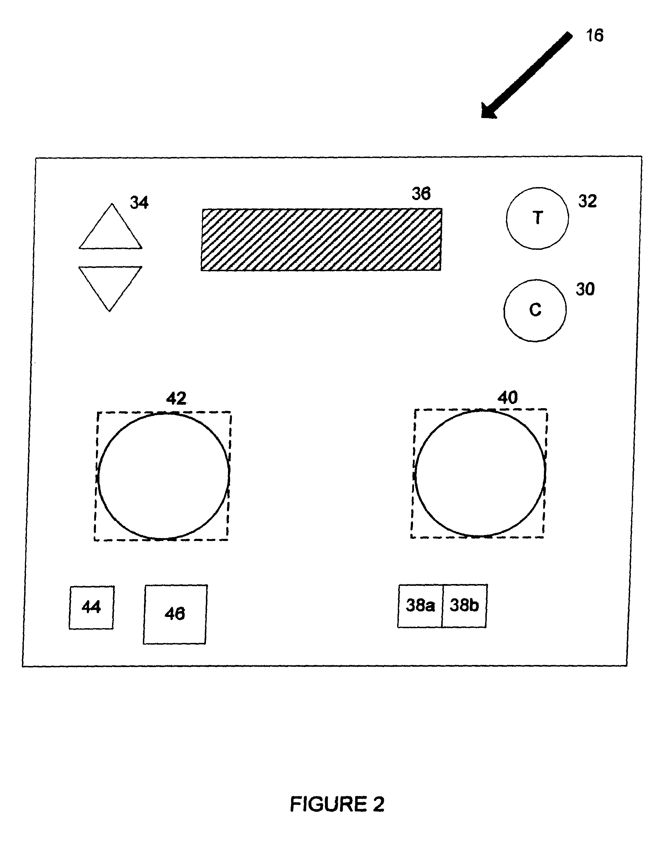

Referring to Figure 2, a room controller 16 comprises a clock setting module 30 which enables a clock heating period to be set based on known usage patterns. The room controller 16 further comprises a temperature setting module 32 for setting appropriate standby and comfort temperature levels. To facilitate the entry of particular times and/or temperatures, the room controller 16 further comprises an upwards/downwards adjustment module 34, which increases the time or temperature, depending on whether the clock setting module 30 or the temperature setting module 32 has been activated.

Collectively, the clock setting module 30 and the temperature setting module 32 enable a user to set, for example, the times at which heat will be required in the bathroom; full heat for a partner leaving for work early in the morning, followed by a standby temperature until full heat is required later in the morning for children preparing for school. This ability to have variable temperature settings during different clock periods has the further advantage that standby temperatures could be used to compensate for unusual changes in external temperature at the start and close of the heating season. For example, with a water heated radiator system a room's standby temperatures could be maintained through early autumn late spring (Northern hemisphere) and ensure, even on exceptionally cold days, that a minimum temperature was always maintained. Once the regular usage patterns for each room and associated temperatures have been established the system would operate with a reduced set of commands from the user.

In the present realisation, the room controller 16 further comprises a display 36 showing the current temperature of the room and red and blue heating indicator lights 38a, 38b. The blue and red heating indicator lights 38a, 38b are activated depending on the heating of the room. So, for example, the activation of the red indicator light 38a indicates that the room is being heated at the highest temperature setting. The controller 18 further comprises status override buttons 40, 42. Pressing the first status override button 40 once turns off the red indicator light 38a and turns on the blue indicator light 38b. This indicates that the system is operating in standby mode and providing heat at the lower temperature setting. Pressing the first override button 40 again turns off the blue indicator light 38b and turns on a green indicator light 44 which indicates that the system is providing some minimum temperature protection and is ready to go should heat be required. Pressing the second override button 42 automatically switches the heating system in that 'room' on at the highest temperature setting. In addition to the above functions, the override buttons 40, 42 also override any clock setting and enable on-demand heating. Finally, the room controller 16 further comprises a low battery indicator 44 and a minimum temperature protect mode indicator 46.

It will be appreciated that Figure 2 merely illustrates one way in which the above functions might be realised, and that other realisations are also possible. More particularly, the embodiment depicted in Figure 2 is particularly relevant to a hard-wired embodiment of the heating system. In the wireless embodiment of the heating system, (the most likely to be used for retrofitting) some of the functions may be altered to conserve battery life. For example, the red and blue LEDs might be replaced by a single LED that will flash once to indicate activation at the standby temperature, or twice to indicate activation at the higher temperature, etc.

It is easily shown and generally accepted (Carbon Trust UK, Energy Savings Trust UK, Sustainable Energy Ireland, etc.) that in a building a 1°C reduction in temperature settings equates to an 8% savings in energy. Initial tests on the system in a 5 bedroom timber frame house produced, (after normalisation of results to account for differences in external temperature, etc.), energy savings of between 25% and 50% ,wherein the higher figure indicates the savings achieved once the system was well set up. A number of examples are provided below showing different potential implementations of the heating system. These simple examples are only indicative of potential energy savings; their main purpose is to illustrate how the various elements of the system may be used to gain energy savings.

Example 1:

This example illustrates the importance of standby temperatures.

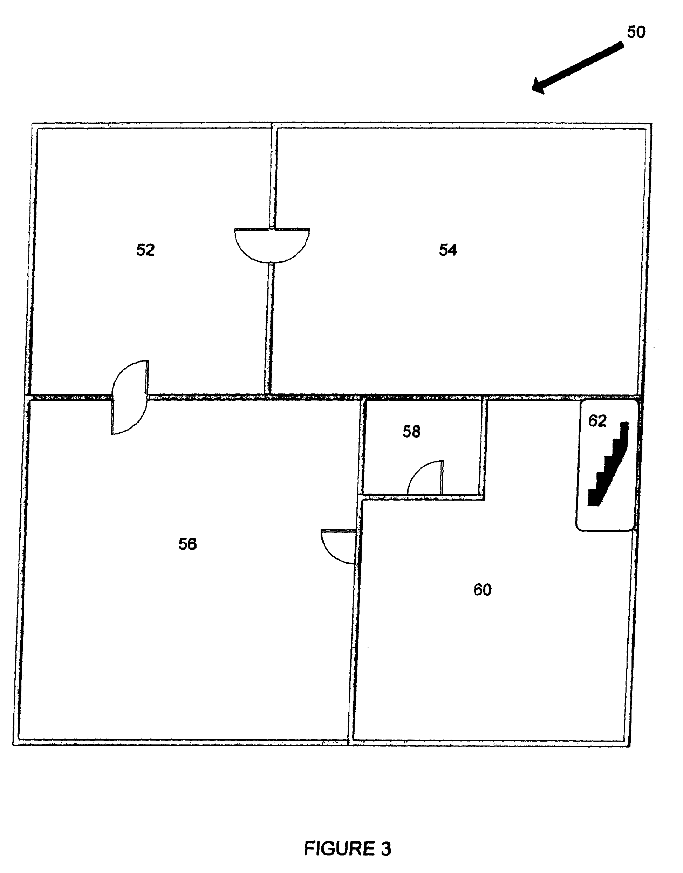

Referring to Figure 3, let the ground floor 50 of a house comprise a dining room 52, a kitchen 54, a living room 56, a toilet 58, a hall 60 and a staircase 62 to the upper floor (not shown). Assume that all the areas ('rooms') on the ground floor 50 are heated to 21 °C (a comfortable room temperature for sitting) in order to provide a base load heating of 100%. However assume that the occupancy of the house is such that 50% of the time is spent in the kitchen and 50% in the living room with other areas of the house being used less frequently. In this case, standby temperatures of 15°C (a comfortable temperature for corridors) could be used in the hall 60, toilet 58 and dining room 56 and a standby temperature of 18°C in the kitchen 54 and living room 56.

Assume that the areas of the kitchen 54 and living room 56 are identical and both are equal to 0.3 of the total floor area. Similarly, it is assumed that the area of the dining room 52 is assumed to be equal to the combined areas of the toilet 58 and hall 60. In this case, the use of the above standby temperatures would provide a 26% energy saving.

This is calculated on the assumption that the estimated overall saving is the sum of the savings/room in proportion to their respective areas to give, as follows:

$$= \{\text{kitchen savings} - \tfrac{1}{2}\ \text{time at standby or}\}\ 0.5 \times 0.3 \times (21\text{-}18) \times 8\%$$

$$+ \{\text{living room savings} - \tfrac{1}{2}\ \text{time at standby or}\}\ 0.5 \times 0.3 \times (21\text{-}18) \times 8\%$$

$$+ \{\text{savings for hall + dining room}\}\ 0.2 \times (21\text{-}15) \times 8\% + 0.2 \times (21\text{-}15) \times 8\%$$

$$= [0.3 \times (21\text{-}18) + 0.4 \times (21\text{-}15)] \times 8\% = 26.4\% \approx 26\%\ \text{energy saving}$$

Example 2:

This example illustrates the importance of being able to individually control the time periods over which the heating is activated in each room. Using the previous example depicted in Figure 3, and assuming that the kitchen 54 is always used for 1 hour before the living room 56 in the morning. Similarly, assume that in the evening, the kitchen 54 is only used infrequently. In this case, the kitchen standby temperature could be reduced to 15°C in the evening. Further, that heating the dining room to 18°C for an hour in the morning and an hour in the evening is sufficient to maintain an acceptable level of temperature in that room.

Thus, over a 16 hour heating period (in this example the longer the heating period the worse the results in terms of percentage energy efficiency gains) there is a 1 hr (1/16) reduction in the living room's 56 heating requirements. Further, there is a 4hr (1/4) reduction in the kitchen's 54 standby temperature and a 2hr total daily heating period for the dining room 52. With this use of individual heating periods for each 'room' the estimated energy savings become 38%. This is calculated as follows:

Over the 16 hour period the relative percentage saving from the hall 60 will be the same $0.2 \times (21\text{-}15) \times 8\% = 9.6\%$

The relative percentage saving for the dining room 52 will be (since it contributes 20% of total energy usage - 20% of total area):

$$\frac{14}{16} \times 20\% = 17.5\%$$

The relative percentage saving from the living room 56 is approximately:

$$\frac{1}{16} \times 30\% + \frac{1}{2} \times \frac{15}{16} \times 0.3 \times (21-18) \times 8\% = 5.25\%$$

The relative percentage saving from the kitchen 54 is approximately:

$$\frac{1}{2} \times \frac{12}{16} \times 0.3 \times (21-18) \times 8\% + \frac{4}{16} \times 0.3 \times (21-15) \times 8\% = 6.3\%$$

Total savings of 38.65% ≈ 38%

Example 3:

This example illustrates the use of the reporting facility of the supervisory control unit to fine-tune the heating requirements of a home. Using the previous example depicted in Figure 3, a report from the data collected by the supervisory control unit would indicate that the areas using the most heat are the kitchen 54 and the living room 56 which together account for over 75% of daily heat usage. Therefore, even small efficiency savings in these areas will provide improved energy efficiency.

The 75% figure is obtained as follows: the savings in areas 54 and 56 from the initial 60% of total usage is reduced to 48.45% of total usage; whereas the savings in the other areas is reduced from 40% to 12.9% of total usage.

Hence, $\dfrac{48.45}{48.45+12.9} = 78.9\%$

In particular, if an acceptable working temperature during periods of activity is 15°C, then a highest temperature of 15°C in the kitchen 54 with a set back temperature of 13°C might not be unreasonable. In addition, a reduction of 0.5°C in the temperature of the living room 56 might not be noticeable but might produce significant energy savings. With these slight adjustments to the heating system the energy savings in the home become 49%. This may be calculated as follows:

Over the 16 hour period the relative percentage saving from the hall 60 will be the same 0.2×(21-15)×8% = 9.6%. The relative percentage saving for the dining room 52 will also be the same:

$$\frac{14}{16} \times 20\% = 17.5\%$$

The relative percentage saving from the living room 56 is approximately:

$$\frac{1}{16} \times 30\% + \frac{1}{2} \times \frac{15}{16} \times 0.3 \times (21-18) \times 8\% + \frac{1}{2} \times \frac{15}{16} \times 0.3 \times (21-20.5) \times 8\% = 5.8\%$$

The relative percentage saving from the kitchen 54 (assuming half the time is spent at the standby temperature) is approximately:

$$0.5 \times 0.3 \times (21-15) \times 8\% + 0.5 \times 0.3 \times (21-13) \times 8\% = 16.8\%$$

Total savings of 49.7% ≈ 49%

A further refinement might be to alter the pattern of room usage. If during the daytime the house only has one occupant then spending time in the dinning room rather than the living room would further reduce energy usage without affecting the levels of heating experienced by the users. Using such a scenario and spending 4 hours a day in the living room at 21⁰C with the rest of the time in the dining room or kitchen, and reducing the heating in the hall and WC areas from 16 to 14 hours a day provides energy savings of 55%. This is estimated as follows:

Over the 16 hour period the relative percentage saving from the hall 60 will be:

$$\frac{2}{16} \times 20\% + \frac{14}{16} \times 0.2 \times (21-15) \times 8\% = 10.9\%$$

The relative percentage saving for the dining room 52 will be:

$$\frac{12}{16} \times 20\% = 15\%$$

The relative percentage saving from the living room 56 is (assuming 4 hours at higher temperature and 4 hours less total heat required) approximately:

$$\frac{4}{16} \times 30\% + \frac{8}{11} \times \frac{11}{16} \times 0.3 \times (21 - 18) \times 8\% + \frac{4}{11} \times \frac{11}{16} \times 0.3 \times (21 - 20.5) \times 8\% = 11.4\%$$

The relative percentage saving from the kitchen 54 (assuming 12 hours is spent at the standby temperature) is approximately:

$$\frac{4}{16} \times 0.3 \times (21 - 15) \times 8\% + \frac{12}{16} \times 0.3 \times (21 - 13) \times 8\% = 18\%$$

Total savings of 55.3% ≈ 55%

Alterations and modifications may be made to the above without departing from the scope of the invention.

**Claims**

1. A distributed temperature control system (10) comprising:

   a plurality of sensors (14) configured to measure a one or more environmental attributes and produce environmental measurement data therefrom;
   a plurality of actuators (12);
   a one or more control units (16, 18) configured to receive environmental measurement data from the sensors (14) and to transmit a one or more control signals to one or more of the actuators (12);

   wherein in use,
   the sensors (14) are deployed in a plurality of rooms of a building to measure the environmental attributes of each such room; and
   in response to received environmental measurement data from a one or more of the rooms, a control unit (16, 18) transmits a control signal to one or more of the actuators (12) and a heating means or a cooling means (20) to cause the temperature of the room to attain a pre-determined desired temperature value for the time at which the environmental measurement was made, independently of the temperatures of the rest of the rooms in the building; and
   wherein the distributed temperature control system (10) further comprises a data storage means (24) configured to store environmental measurement data for each of the rooms.

2. The distributed temperature control system (10) as claimed in claim 1, wherein the distributed temperature control system (10) comprises a data presentation means (26) configured to present in report form to a user, the collated environmental measurement data from the data storage means (24).

3. The distributed temperature control system (10) as claimed in claim 1 or claim 2, wherein the data presentation means (26) is operable within a separate computer device.

4. The distributed temperature control system (10) as claimed in any of the preceding claims, wherein the sensors (14) are temperature sensors and the environmental measurement data is temperature measurement data.

5. The distributed temperature control system (10) as claimed in any of the preceding claims, wherein the sensors (14) are smoke detectors or humidity sensors or air quality sensors or particulate detectors.

6. The distributed temperature control system (10) as claimed in any of the preceding claims, wherein the distributed temperature control system (10) comprises a means (30, 32) of setting multiple desired temperatures for each room, wherein each such temperature has an associated time range over which the distributed temperature control system (10) is to control the room's temperature to attain that temperature.

**7.** The distributed temperature control system (10) as claimed in any of the preceding claims, wherein the distributed temperature control system (10) comprises a means (32) of setting multiple desired temperatures for a particular time range for each room.

**8.** The distributed control system (10) as claimed in claim 7, wherein a first desired temperature for a particular time range is a standby temperature, whose value is selected to provide heating to the room when unoccupied.

**9.** The distributed temperature control system (10) as claimed in claim 7 or claim 8, wherein a second desired temperature for a particular time range has a value selected to provide heating to the room when occupied.

**10.** The distributed temperature control system (10) as claimed in any one of claims 7 to 9, wherein the distributed temperature control system (10) comprises a means of switching between the multiple desired temperatures for a particular time range for each room.

**11.** The distributed temperature control system (10) as claimed in any one of claims 7 to 10, wherein the distributed temperature control system (10) comprises a secondary storage means configured to store multiple desired temperatures for a given time range.

**12.** The distributed temperature control system (10) as claimed in any one of the preceding claims, wherein the desired temperatures and associated time ranges of the distributed temperature control system (10) are settable by a user.

**13.** The distributed temperature control system (10) as claimed in any one of the preceding claims, wherein the distributed temperature control system (10) comprises a switching means (40, 42) configured to allow a user to switch the desired temperature of a room between any of the multiple desired temperatures set therefor.

**14.** The distributed temperature control system (10) as claimed in any one of the preceding claims, wherein the distributed temperature control system (10) comprises a user-activated means (34) of decreasing the temperature or increasing the desired temperature of a room.

**15.** The distributed temperature control system (10) as claimed in any one of the preceding claims, wherein the distributed temperature control system (10) comprises a remote activation means configured to remotely activate the distributed temperature control system.

**16.** The distributed temperature control system (10) as claimed in claim 15, wherein the remote activation means is accessible by a mobile phone.

**17.** The distributed temperature control system (10) as claimed in claim 15, wherein the remote activation means is accessible through the internet.

**18.** The distributed temperature control system (10) as claimed in any of the preceding claims, wherein the distributed temperature control system (10) comprises a remote disabling means configured to remotely disable the distributed temperature control system (10).

**19.** The distributed temperature control system (10) as claimed in claim 18, wherein the remote disabling means is accessible by a mobile phone.

**20.** The distributed temperature control system (10) as claimed in claim 18, wherein the remote disabling means is accessible through the internet.

FIGURE 1

FIGURE 2

FIGURE 3